(19) **Europäisches Patentamt / European Patent Office / Office européen des brevets**

(11) **EP 1 867 380 B1**

(12) **EUROPEAN PATENT SPECIFICATION**

(45) Date of publication and mention
of the grant of the patent:
**12.10.2011 Bulletin 2011/41**

(51) Int Cl.:
*B01D 53/32* (2006.01)   *F01N 3/01* (2006.01)
*F01N 3/027* (2006.01)

(21) Application number: **07252425.9**

(22) Date of filing: **14.06.2007**

(54) **Electrical processing method and apparatus for diesel engine exhaust gas**

Verfahren und Vorrichtung zur elektrischen Behandlung von Abgasen eines Dieselmotors

Procédé de traitement électrique et appareil pour gaz d'échappement de moteur diesel

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **14.06.2006 JP 2006165030**
**20.11.2006 JP 2006313451**

(43) Date of publication of application:
**19.12.2007 Bulletin 2007/51**

(73) Proprietor: **Usui Kokusai Sangyo Kaisha Limited Sunto-gun, Shizuoka (JP)**

(72) Inventor: **Furugen, Munekatsu**
**Nishinomiya-shi, Hyogo 662-0875 (JP)**

(74) Representative: **Harris, David James**
**Barker Brettell LLP**
**100 Hagley Road**
**Edgbaston**
**Birmingham**
**B16 8QQ (GB)**

(56) References cited:
**EP-A- 1 837 489     DE-A1- 4 114 935**
**DE-U1- 20 303 087**

**Description**

Technical Field of the Invention

The present invention relates to an exhaust gas processing technology of removing and collecting a particulate matter (which will be referred to as a "PM" hereinafter) mainly containing carbon included in an exhaust gas from a diesel engine and, more particularly to an electrical processing method and an electrical processing apparatus for a diesel engine exhaust gas which utilize corona discharge.

Background Art

As a power source for various marine vessels, power generators, large construction machines, or various automobiles, a diesel engine is extensive adopted, but a PM included in an exhaust gas emitted from this diesel engine not only produces air pollution but also is a substance that is very harmful to human bodies as well known, and hence collection of the exhaust gas is very important. Therefore, many propositions of, such as an improvement in a combustion method for a diesel engine, adoption of various kinds of filters, or a method of utilizing corona discharge to perform electrical processing, have been already made, and some of them have been put to practical use.

However, just improving a combustion method cannot cope with many driving operations at the time of cool temperature starting of a diesel engine, hill-climbing, or excessive loading, therefore, it is difficult to greatly reduce PMs. For example, in a method of collecting PMs by using such as a ceramic filter, fine holes or gaps are used so as to collect PMs. Accordingly, a pressure drop (a ventilation resistance) of an exhaust gas is precipitously increased when a certain quantity of PMs is collected, which becomes a factor of degrading a fuel consumption or causes an engine trouble. Further, a filter regenerating method of using a catalyst to burn collected PMs has an unfavorable problem that a pressure drop in an exhaust gas is increased due to deterioration in a catalyst caused by long-term use of the catalyst.

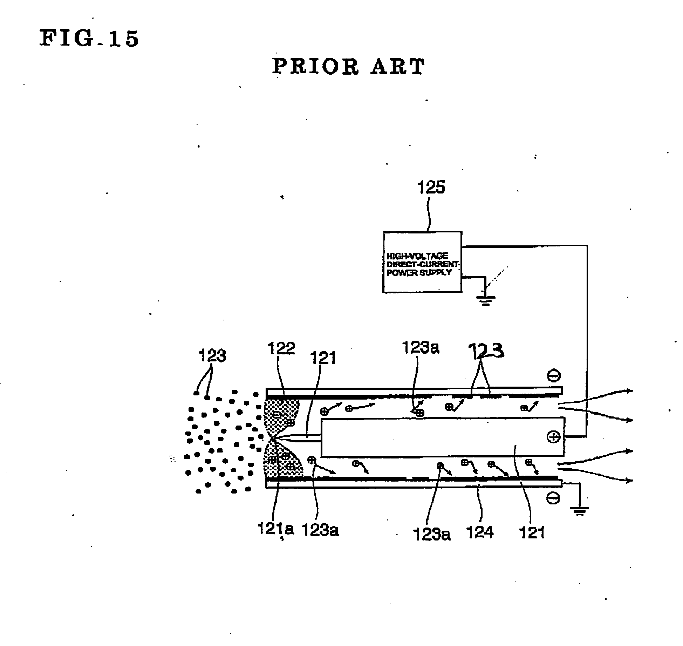

On the other hand, as depicted in FIG. 15 showing an example, as a method of utilizing corona discharge for electrical processing, there is known an exhaust PM collection apparatus for a diesel engine (see, e.g., Japanese Patent Application Laid-open Publication No. H9(1997)-112246) comprising: a needle electrode 121 which provokes corona discharge around a needlepoint 121a to electrically charge PMs 123 in an exhaust gas; a collecting electrode 124 which collects the electrically charged PMs 123a by an electrostatic force; and a high-voltage direct-current power supply 125 that applies a predetermined direct-current high voltage to a space between the needle electrode 121 and the collecting electrode 124. Furthermore, an exhaust gas collection apparatus (see, e.g., Japanese Patent Application Laid-open Publication No. H6(1994)-173637) comprising: a cylindrical body constituting one of a pair of collecting electrodes for PM collection provided in an exhaust path; an electrode body that is provided at a central part of the cylindrical body to extend in an axial direction and constitutes the other of the pair of collecting electrodes; a high-voltage power supply region that forms an electrostatic field between the pair of collecting electrodes to accumulate PMs in an exhaust gas on an inner surface of the cylindrical body; and a scratching region that relatively swivels along the inner surface of the cylindrical body with respect to the cylindrical body to scratch off the PMs stored on the inner surface of the cylindrical body, an exhaust gas collection apparatus (see, e.g., Japanese Patent Application Laid-open Publication No. 2003-269133) comprising: a plurality of PM collecting electrodes each including an electrical insulator layer and a catalytic layer; and a charge electrode including a plurality of needle electrodes which are respectively combined with the PM collecting electrodes and protrude toward the electrical insulator layer, and others have been aboundingly proposed.

However, the conventional diesel engine exhaust gas processing technology that utilizes corona discharge for electrical processing still has various problems that should be improved. For example, each of the exhaust PM collecting apparatuses disclosed in the above-mentioned Japanese Patent Application Laid-open Publication Nos. H9(1997)-112246, and H6(1994)-173637 adopts an electrostatic precipitator method that is a so-called one-stage method, and has basic problems, i.e., a difficulty in setting a discharge voltage and a collection deflecting voltage to respective appropriate conditions since both the voltages have the same potential, and assuring a large gap between a deflecting electrode and a collecting electrode to avoid generation of sparks. Therefore, the exhaust PM collecting apparatus disclosed in the Japanese Patent Application Laid-open Publication Nos. H9(1997)-112246, and H6(1994)-173637 has a drawback that particles passing straight through a collecting section without being collected are increased and a collection efficiency is lowered. Furthermore, in order to increase the collection efficiency, a capacity of a collecting region must be enlarged, and a size of the apparatus must be increased, which is inappropriate as an automobile component which should be reduced in size and weight. Moreover, although the exhaust gas collection apparatus disclosed in the above-mentioned Japanese Patent Application Laid-open Publication No. 2003-269133 adopts a so-called two-stage electrostatic precipitator method, and it has the following disadvantage. That is, since a countermeasure for contamination of the needle electrodes is not taken, when a high voltage of several ten thousand volts is applied to the discharge electrode, contamination degrades electrical insulation properties, and PM collecting performance cannot be demonstrated. Additionally, the discharge electrode cannot avoid defacement due to an exhaust gas having corrosion properties, and cannot maintain stable performance over a long term. Further, in case of a wire electrode, breaking is apt to occur due to a vibration or an impact shock during travelling of such as an automobile, and this electrode has a problem in strength. That is, the conventional exhaust gas processing means that utilizes corona discharge for electrical processing has a difficulty in assuring high insulation properties of the discharge electrode and still has problems that should be solved in terms of practical utility.

The present invention provides an electrical processing method and an electrical processing apparatus for a diesel engine exhaust gas that can solve the problems in the conventional diesel engine exhaust gas processing technology utilizing corona discharge, highly efficiently remove PMs in an exhaust gas from a diesel engine, and demonstrate stable performance for a long time.

We are also aware of DE 20303087 which is considered to be the closest prior art and discloses the features of the pre-characterising portion of the independent claims. It discloses an emission electrode that sits within a ring electrode to form a needle-like corona area in the emission electrode.

Statement of the Invention

To solve the problems, according to a first aspect of the present invention, there is provided a method of processing a diesel engine exhaust gas to remove particulate matters mainly containing carbon by electrical means, which comprises the steps of:

providing a needle electrode (4) whose outer periphery is covered with a coating having a multilayer structure which is arranged on an upstream side of an exhaust gas path in an electrical exhaust gas processing apparatus, the needle electrode (4) providing a discharge and charge region comprising respectively a corona discharge region (2-1) that emits electrons based on corona discharge by the needle electrode (4) and a charge region (2-2) that charges the particulate matters with the emitted electrons, charging the particulate matters in an exhaust gas in the charge region with the electrons corona-discharged in the corona discharge region (2-1), and arranging a collection region on a downstream side of the exhaust gas path which collects the charged particulate matters, and providing a coating that covers the outer periphery of the needle electrode, and includes a first layer insulator coating (4a) made of an insulator, characterised by providing a coating having a multilayer structure and which further comprises a second layer conductor coating (4b) made of a conductor that covers an outer side of the first layer insulator coating (4a), and a third layer insulator coating (4c) that covers an outer side of the second layer conductor coating (4b) with an insulator.

On the other hand, according to a second aspect of the present invention, there is provided an electrical processing apparatus for a diesel engine exhaust gas which removes particulate matters mainly containing carbon included in a diesel engine exhaust gas by electrical means, comprising a needle electrode (4) arranged on an upstream side of an exhaust gas path (1) in the processing apparatus main body, a discharge and charge region (2) comprising a corona discharge region (2-1) that emits electrons (10) based on corona discharge by the needle electrode (4) and a charge region (2-2) that charges the particulate matters with the emitted electrons (10) is provided, and a collection region that collects the charged particulate matters is arranged on a downstream side of the exhaust gas path (1), and in which the needle electrode (4) has an outer periphery covered with a coating which includes a first conductive layer, characterised in that the coating has a multilayer structure that covers the outer periphery of the needle electrode and further includes a second layer conductor coating (4b) made of a conductor that covers an outer side of the first layer insulator coating (4a), and a third layer insulator coating (4c) that covers an outer side of the second layer conductor coating (4b) with an insulator.

The first layer insulator coating and the third layer insulator coating of the needle electrode may be formed of such as quartz glass, alumina, or ceramics; the second layer conductor coating of the same is formed of a conductor, e.g., a metal tube having a small wall thickness or a wire sheet.

Moreover, in the electrical processing apparatus for a diesel engine exhaust gas according to the present invention, a distal end of the corona discharge region on a discharge side of the needle electrode faces a downstream side of an exhaust gas flow and is arranged to be placed in a potential core of a seal gas flow or on a downstream side of the potential core, thereby discharging corona electrons toward the downstream side, the needle electrode is inserted and arranged in a seal gas tube formed of an insulator, the seal gas tube is made of an insulator material, e.g., alumina, and a protruding region of the needle electrode from a seal gas tube end is placed in a potential core of a gas flow in the seal gas tube.

Additionally, in the electrical processing apparatus for a diesel engine exhaust gas according to the present invention, the collection region has a single-layer plate structure, the collection region is formed of a punching metal type collection plate or a slit type collection plate, and a rate of a hole area defined as (an opening region total area)/(a collection region substantial front-area) is set to 3 to 20%, the collection region is formed of a collection plate whose collection surface has a honeycomb structure, a collection plate holding rod is arranged in a seal tube made of an insulator.

Further, the electrical processing apparatus for a diesel engine exhaust gas according to the present invention has a preferable conformation in which a dummy tube region is provided on a tube end placed on an opposite side of a needle electrode distal end side of the seal gas tube in parallel with a direction of the exhaust gas flow, and the seal gas tube having the dummy tube region satisfies conditions of L1/D>1.5 and L2/D>0.5, where D is an internal diameter of the seal gas tube, L2 is a length of the dummy tube region in the seal gas tube region, and L1 is a length from the dummy tube region to the distal end region.

Further, in the electrical processing apparatus for a diesel engine exhaust gas according to the present invention, a cyclone precipitator is additionally provided on a rear stage of the electrical processing apparatus for an exhaust gas as a preferable conformation, and the collection region of the electrical processing apparatus for an exhaust gas is constituted by arranging one or more collection plates each of which is formed of either a base plate made of one plate having no opening on a collection surface or a combination of the base plate and a lattice-like fin provided on the collection surface side of the base plate so as to form a gap between the collection plates and the apparatus main body inner wall as another preferable conformation.

The electrical processing apparatus for a diesel engine exhaust gas according to the present invention is characterized in that the base plate has a two-layer structure by arranging an insulator material on the collection surface and an earthed conductor material on a rear surface.

Furthermore, according to the electrical processing apparatus for a diesel engine of the present invention, as one of preferable conformations, particle agglomeration coarsening means is arranged on a front stage of the cyclone precipitator, and either a particle agglomeration tube having a honeycomb structure or a particle agglomeration plate constituted by arranging a plurality of punching metals or wire sheets at predetermined intervals can be used as the particle agglomeration coarsening means.

According to the electrical processing apparatus for a diesel engine exhaust gas of the present invention, an inner wall surface of the apparatus main body can function as the collection surface or the collection region for the particulate matters, a scheme of further arranging a bypass duct for the exhaust gas between the upstream side and the downstream side of the apparatus and performing maintenance of the collection plate while a gas switching valve is used to flow the exhaust gas through the bypass duct as a maintenance scheme of the particulate matter collection plate in the electrical processing apparatus for an exhaust gas, and at least the two electrical processing apparatuses for an exhaust gas are arranged in parallel in the same system and a flow of the exhaust gas is controlled through a switching valve provided on an upstream side of the flow of the exhaust gas to alternately or simultaneously operate the two electrical processing apparatus for an exhaust gas.

The electrical processing method and apparatus for a diesel engine exhaust gas of the present invention is a collection processing means for an exhaust gas from a diesel engine that is extensively used as a power source in marine vessels, power generators, large-scale construction machines, and various automobiles, whereby a PM, is a harmful particulate matter mainly containing carbon included in the exhaust gas, can be efficiently removed, and a high collection ratio of the exhaust gas can be achieved. Moreover, removal of the PM contained in the diesel engine exhaust gas can be stably maintained over a long period with a high collection efficiency, and an excellent effect, such as achieving a substantial maintenance-free state required as an automobile component, can be demonstrated. Incidentally, it is needless to say that the electrical processing method and processing apparatus for an exhaust gas of the present invention can be effectively exploited in not only collection of an exhaust gas from the diesel engine but also collection of various kinds of exhaust gases, collection efficiency

Description of Drawings

FIG. 1 is a schematic view showing a first embodiment apparatus of an electrical processing apparatus for a diesel engine exhaust gas according to the present invention;

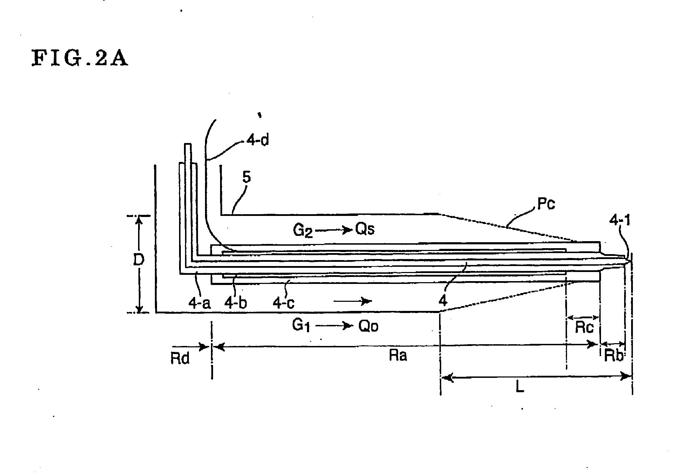

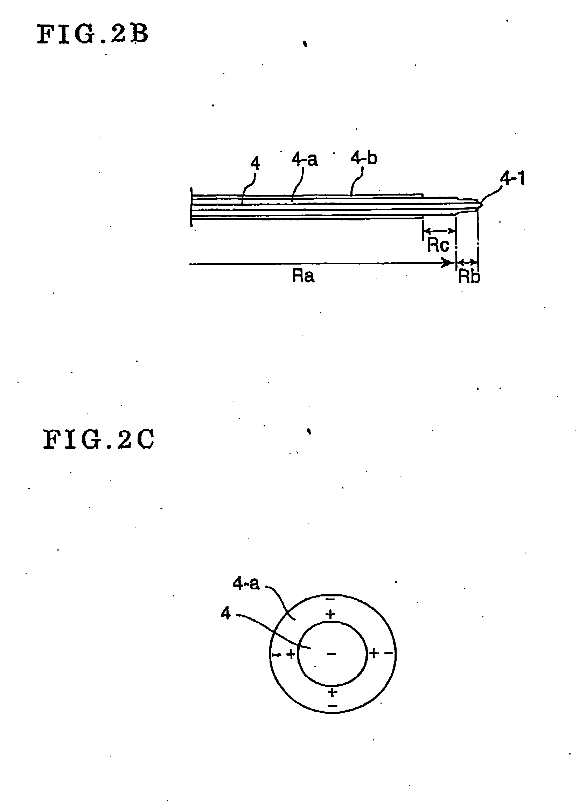

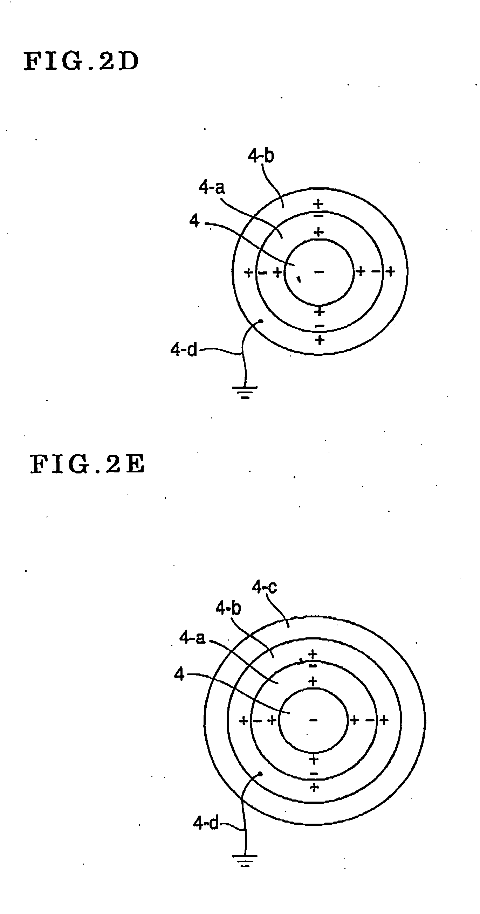

FIGS. 2 are explanatory drawings showing structures of a needle electrode of a discharge electrode and a seal tube distal end section in the first embodiment apparatus, in which FIG. 2A is a schematic side view showing an entire discharge electrode distal end region including the needle electrode covered with a coating having a multilayer structure, FIG. 2B is a schematic primary part side view showing up to a second layer conductor coating at the distal end region of the needle electrode, FIG. 2C is a schematic lateral cross-sectional view of an Rc region of the needle electrode in FIG. 2B, FIG. 2D is a schematic lateral cross-sectional view of an Ra region of the needle electrode in FIG. 2B, and FIG. 2E is a schematic lateral cross-sectional view of a middle part in the Ra region of the needle electrode in FIG. 2A;

FIG. 3 is a schematic view showing another embodiment of a seal gas tube in the first embodiment apparatus;

FIG. 4 is a schematic view showing still another embodiment of the seal gas tube in the first embodiment apparatus;

FIG. 5 is a schematic explanatory drawing showing an PM collecting plate in the first embodiment apparatus;

FIGS. 6 are explanatory drawings of through holes in the PM collecting plate in the first embodiment apparatus, in which FIG. 6A is an explanatory drawing showing a position and a hole diameter of each through hole in the PM collection plate and FIG. 6B is a cross-sectional view taken along a line A-A in FIG. 6A;

FIGS. 7 are schematic views showing another PM collection plate in the first embodiment apparatus, in which FIG. 7A is a front view and FIG. 7B is a side view;

FIG. 8 is a schematic explanatory drawing showing an example of PM combusting means of a collection plate in the apparatus according to the present invention;

FIG. 9 is a schematic view showing a second embodiment apparatus (with a cyclone precipitator) of an electrical processing apparatus for a diesel engine exhaust gas according to the present invention;

FIGS. 10 show a collection plate in the second embodiment apparatus depicted in FIG. 9 in an enlarging manner, in which FIG. 10A is a schematic perspective view in which a lattice-like fin is arranged on a base plate and FIG. 10B is a schematic perspective view showing the base plate alone;

FIG. 11 is a schematic perspective view of a particle agglomeration tube having a honeycomb structure, showing an example of particle agglomeration coarsening means disposed on a front stage of a cyclone precipitator in the second embodiment apparatus depicted in FIG. 9;

FIG. 12 is a schematic perspective view of a particle agglomeration plate constituted by arranging a plurality of punching metals at intervals, showing particle agglomeration coarsening means arranged on the front stage of the cycle precipitator in the second embodiment apparatus depicted in FIG. 9;

FIG. 13 is a schematic view showing an embodiment of a maintenance scheme of a collection plate in the apparatus according to the present invention;

FIG. 14 is a schematic view showing an example where at least two exhaust gas electrical processing apparatuses are arranged in the same system in parallel to be used; and

FIG. 15 is a schematic explanatory drawing showing an example of a conventional exhaust PM collection device for a diesel engine intended by the present invention.

Description of Specific Embodiments

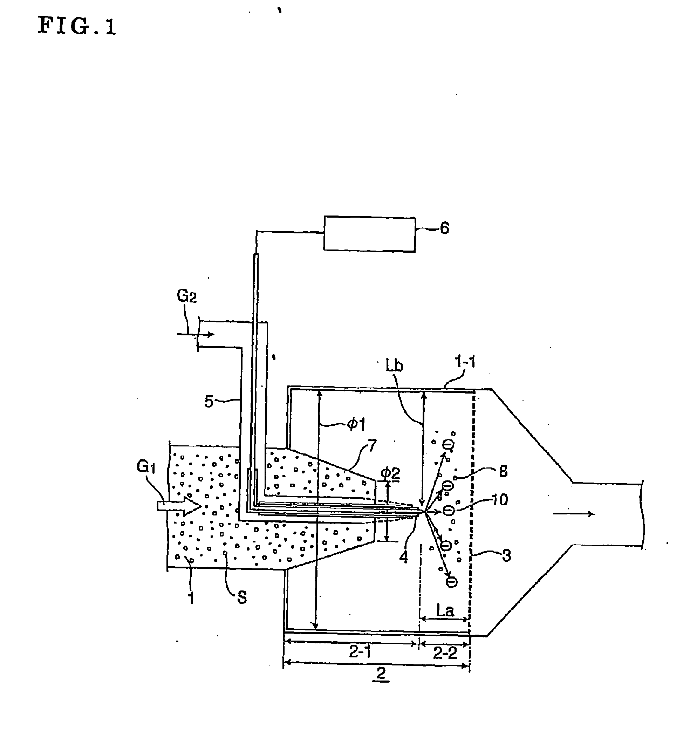

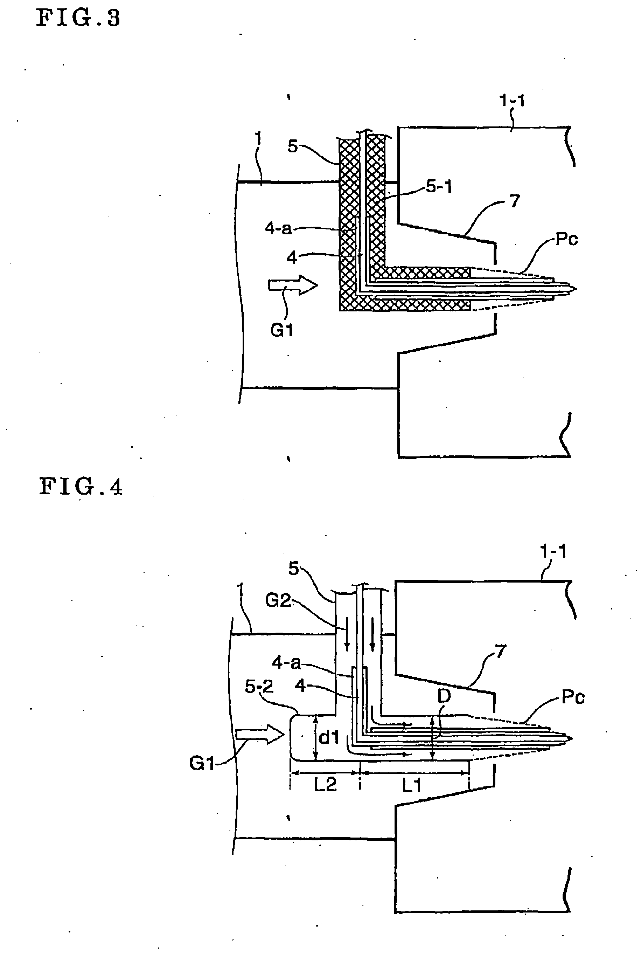

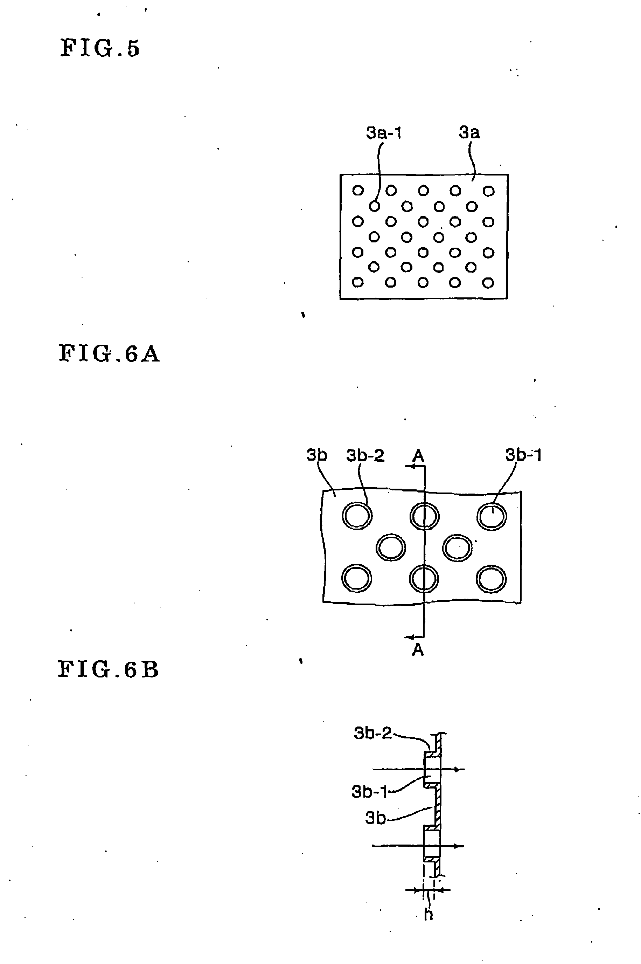

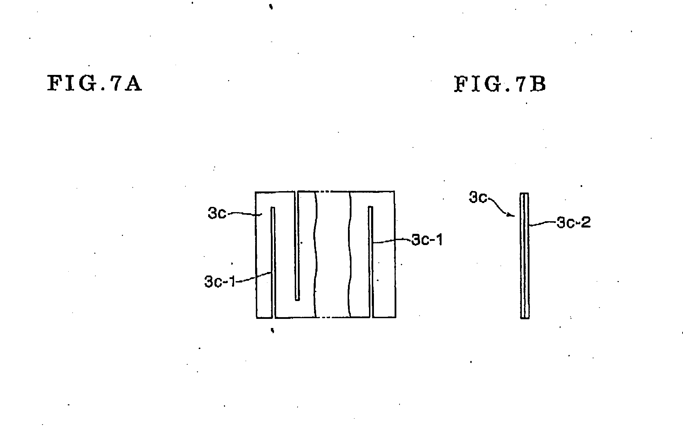

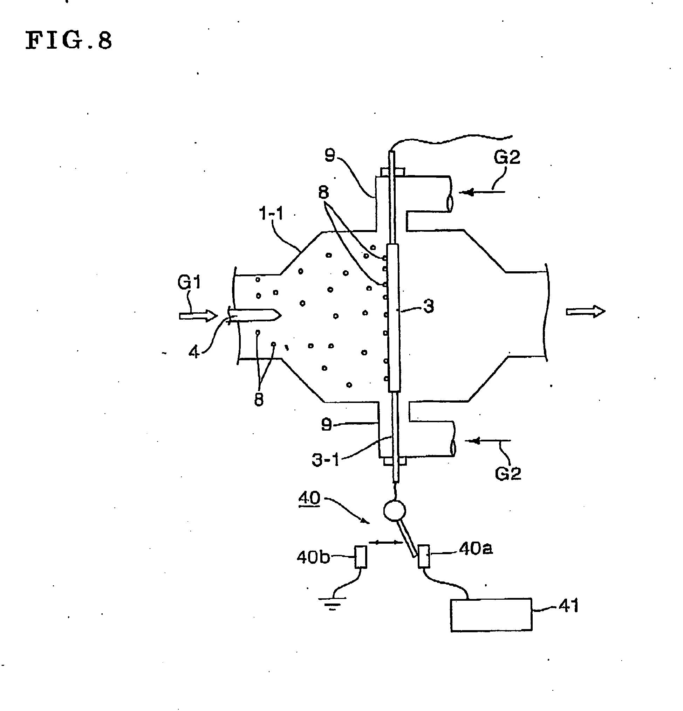

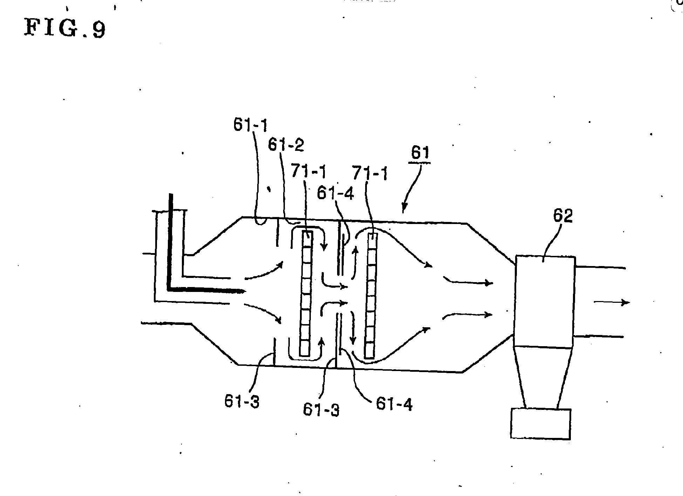

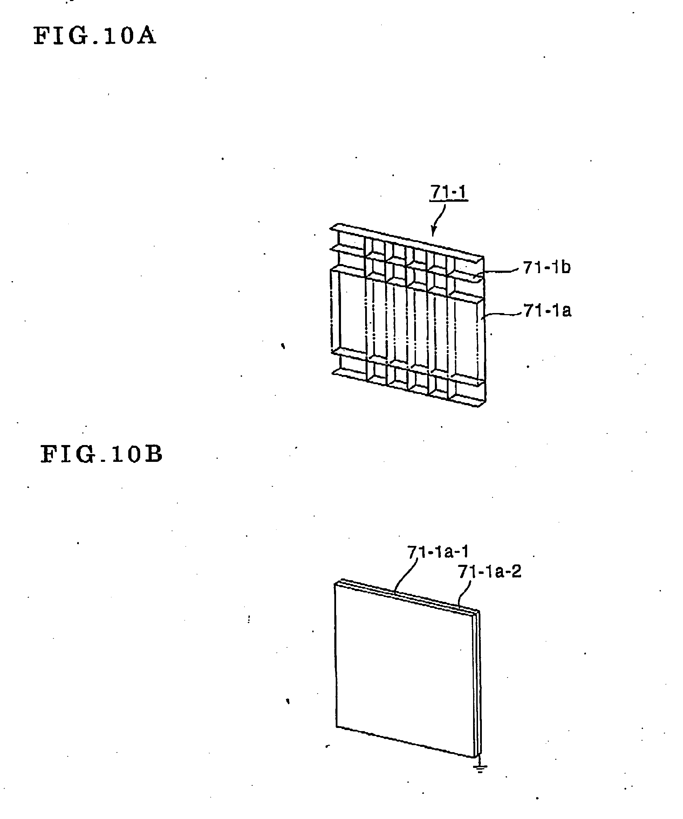

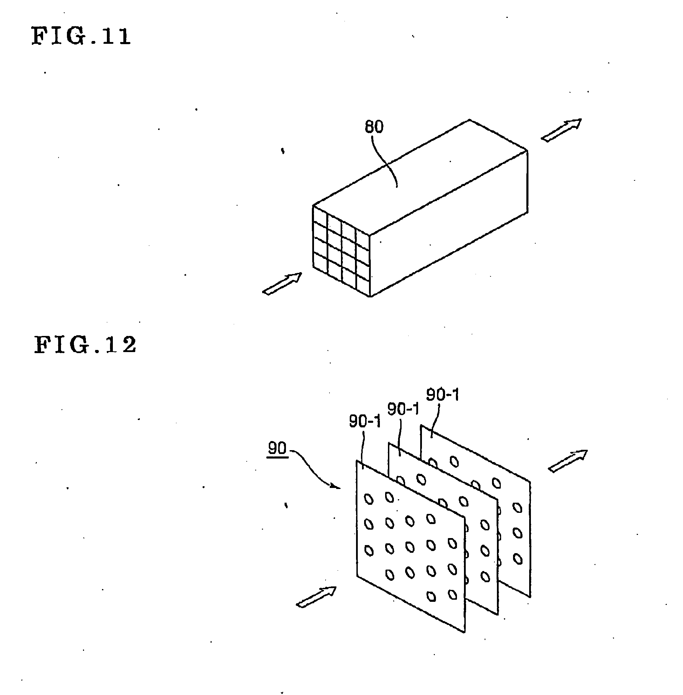

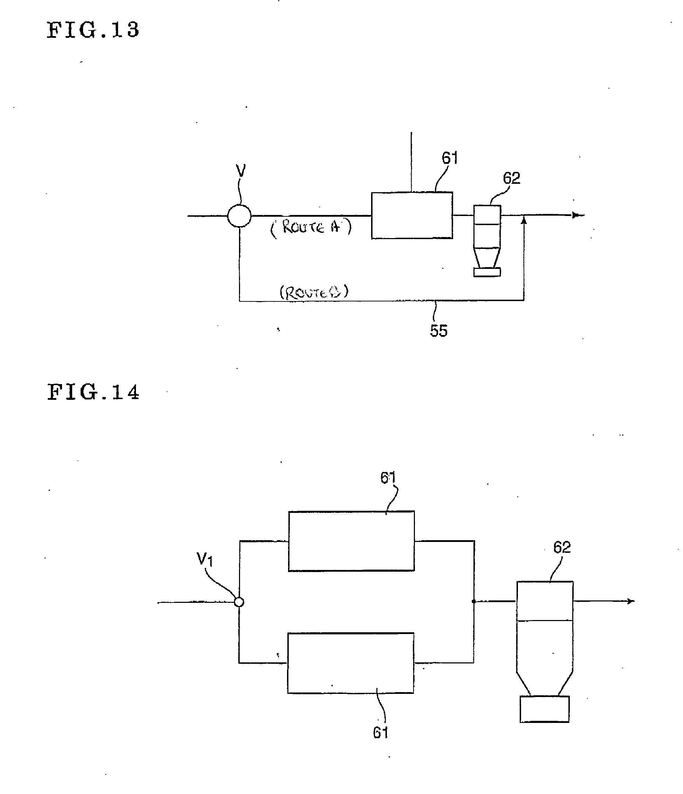

FIG. 1 is a schematic view showing a first embodiment apparatus of an electrical processing apparatus for a diesel engine exhaust gas according to the present invention; FIGS. 2 are explanatory drawings showing structures of a needle electrode of a discharge electrode and a seal tube distal end region in the first embodiment apparatus, in which FIG. 2A is a schematic side view showing an entire discharge electrode distal end section including the needle electrode covered with a coating having a multilayer structure, FIG. 2B is a schematic primary part side view showing up to a second layer conductor coating at the distal end region of the needle electrode, FIG. 2C is a schematic lateral cross-sectional view of an Rc region of the needle electrode in FIG. 2B, FIG. 2D is a schematic lateral cross-sectional view of an Ra region of the needle electrode in FIG. 2B, and FIG. 2E is a schematic lateral cross-sectional view of a middle part in the Ra region of the needle electrode in FIG. 2A; FIG. 3 is a schematic view showing another embodiment of a seal gas tube in the first embodiment apparatus; FIG. 4 is a schematic view showing still another embodiment of the seal gas tube in the first embodiment apparatus; FIG. 5 is a schematic explanatory drawing showing an PM collecting plate in the first embodiment apparatus; FIGS. 6 are explanatory drawings of through holes in the PM collection plate in the first embodiment apparatus, in which FIG. 6A is an explanatory drawing showing a position and a hole diameter of each through hole in the PM collecting plate and FIG. 6B is a cross-sectional view taken along a line A-A in FIG. 6A; FIGS. 7, are schematic views showing another PM collection plate in the first embodiment apparatus, in which FIG. 7A is a front view and FIG. 7B is a side view; FIG. 8 is a schematic explanatory drawing showing an example of PM combusting means of a collection plate in the apparatus according to the present invention; FIG. 9 is a schematic view showing a second embodiment apparatus (with a cyclone precipitator) of an electrical processing apparatus for a diesel engine exhaust gas according to the present invention; FIGS. 10 show a collection plate in the second embodiment apparatus depicted in FIG. 9 in an enlarging manner, in which FIG. 10A is a schematic perspective view in which a lattice-like fin is arranged on a base plate and FIG. 10B is a schematic perspective view showing the base plate alone; FIG. 11 is a schematic perspective view of a particle agglomeration tube having a honeycomb structure, showing an example of particle agglomeration coarsening means disposed on a front stage of a cyclone precipitator in the second embodiment apparatus depicted in FIG. 9; FIG. 12 is a schematic perspective view of a particle agglomeration plate constituted by arranging a plurality of punching metals at intervals, showing particle agglomeration coarsening means arranged on the front stage of the cycle precipitator in the second embodiment apparatus depicted in FIG. 9; FIG. 13 is a schematic view showing an embodiment of a maintenance scheme of a collection plate in the apparatus according to the present invention; and FIG. 14 is a schematic view showing an example where at least two exhaust gas electrical processing apparatuses are arranged in the same system in parallel to be used.

As shown in FIG. 1, a basic structure of the electrical processing apparatus for a diesel engine exhaust gas of the present invention is constituted of: an exhaust gas guide tube 7 provided to protrude toward the inside of a main apparatus from a main body wall 1-1 of an apparatus main body; a seal gas tube 5 that has a distal end reaching the vicinity of an opening region in the exhaust gas guide tube 7; a needle electrode 4 that is partially apart from an exhaust gas path 1 by the seal gas tube 5 and arranged in such a manner that a distal end of its discharge electrode protrudes toward a downstream side of the exhaust gas path 1 from the distal end opening region of the seal gas tube 5; a collection plate 3 that is arranged on the downstream side of the exhaust gas path 1 in the exhaust gas processing apparatus main body; and a high-voltage power supply device 6 as a different device that applies a high-voltage direct-current voltage to the needle electrode 4.

As shown in FIG 1, the exhaust gas processing apparatus according to the first embodiment based on the present invention has a so-called two-stage structure where an outer periphery of the needle electrode 4 arranged on an upstream side of the exhaust gas path 1 in the processing apparatus main body through the exhaust gas guide tube 7 and the seal gas tube 5 is covered with a coating having a multilayer structure, a discharge and charge region 2 formed of a corona discharge region 2-1 that emits electrons 10 based on corona discharge using the needle electrode 4 and a charge region 2-2 that charges a particulate matters S mainly containing carbon in the exhaust gas G1 with the emitted corona electrons 10 is provided, and the collection plate 3 that collects the charged particulate matters S on the downstream side of the exhaust gas path 1 is arranged in the main body wall 1-1 of the apparatus main body, and the needle electrode 4 constituting the discharge electrode is arranged in the exhaust gas path 1 to face a downstream side of an exhaust gas flow through the seal gas tube 5 formed of an insulator, e.g., ceramics like alumina or heat-resistant glass, and its distal end protrudes from an opening end of the seal gas tube 5, and wiring is carried out in such a manner that a direct-current high-voltage of several ten thousand volts is applied from the external high-voltage power supply device 6.

As a material of this needle electrode 4, an electroconductive material, e.g., stainless steel or a cemented carbide alloy is preferably used. According to the needle electrode 4 based on the present invention, a needle electrode member is constituted of the needle electrode 4 serving as a discharge electrode and a multilayer coating that covers an outer surface of the needle electrode 4 with such as an insulator as shown in FIG. 2A to FIG. 2E. As depicted in FIG. 2A, the electrode member can be divided into a needle electrode middle region Ra and a distal end region Rb that emits corona electrons based on corona discharge, and a first layer insulator coating 4-a that covers an outer periphery of the needle electrode 4 with an insulating material, a second layer conductor coating 4-b that covers the first layer insulator coating with a conductor material, and a third layer insulator coating 4-c that covers this second layer conductor coating with an insulating material are formed in the needle electrode middle region Ra.

As a coating material forming the first layer insulator coating 4-1, a material having both electrical insulation and corrosion resistance, e.g., quartz glass, alumina, or ceramics, is preferably used. Since a thickness of the first layer insulator coating 4-a is dependent on a voltage applied to the needle electrode 4 and dielectric breakdown strength or a temperature of a material of the needle electrode 4, a fixed absolute dimension as an appropriate thickness cannot be specified. However, when a thickness is very thin, the coating material electrically undergoes dielectric breakdown and insulation performance is eliminated, and hence a thickness that is approximately 1.1-fold to threefold of a dielectric breakdown limit thickness is practically desirable. Further, as a coating material forming the second layer conductor coating 4-b, a material obtained by winding a metal thin plate or a woven wire or a conductor, such as a metal tube having a thin wall, can be used to cover an outer peripheral surface of the first layer insulator coating 4-a. A thickness of the second layer conductor coating 4-b is not specified in terms of function in particular. As shown in FIG. 2D, the second layer conductor coating 4-b must be earthed to the apparatus main body through a conductor wire 4-d. As the earth conductor wire 4-d, one having an outer surface subjected to insulation coating is used, and this earth conductor wire 4-d is led to the apparatus main body through the seal gas tube 5 to be wire-connected, thereby achieving grounding. Furthermore, as a material forming the third layer insulator coating 4-c, the same material as that used in the first layer insulator coating 4-a is used. In regard to a thickness of the third layer insulator coating 4-c, like the first layer insulator coating, a fixed absolute dimension as an appropriate thickness is not specified, and a thickness that is equivalent to that of the first layer insulating material can be selected

The first layer coating, the second layer coating, and the third layer coating are sequentially formed on the outer surface of the needle electrode 4 according to the present invention to form the multilayer coating layer. In case of an exposed state where no coating is formed on the outer surface of the needle electrode 4, since an adhesion preventing measure against PMs is not taken for the outer surface of the seal gas tube 5, therefore, PMs in the exhaust gas unavoidably adhere on the outer surface of the seal gas tube 5, and a spark is generated between the distal end of the seal gas tube 5 and the exposed outer surface of the needle electrode 4 placed immediately below the distal end. Normal corona discharge is not performed at the needle electrode distal end 4-1 due to this spark, charge of corona electrons with respect to the PMs becomes insufficient, thereby considerably decreasing a PM collection efficiency.

When the first layer insulator coating 4-a alone is provided to the needle electrode 4 as shown in FIG. 2E, a hydrodynamic force of a seal gas considerably reduces PM adhesion with respect, to the needle electrode middle region in a seal gas potential core region Pc at an outlet of the seal gas tube 5, and hence providing the first layer insulator coating 4-a enables maintaining the high PM collection efficiency over a relatively long period as compared with an example where an insulator coating is not provided on the outer surface of the needle electrode 4 at all. However, during long-time driving like an actual engine, PM adhesion with respect to the needle electrode middle region Ra protruding from an opening region at the distal end of the seal gas tube 5 is gradually increased, which finally leads to occurrence of a spark. As shown in a lateral cross section of FIG. 2C, in regard to this phenomenon, when the insulator coating 4-a constituted of a single layer is provided on the outer surface of the needle electrode 4, an electric potential having the same polarity as the needle electrode is produced on the outer surface side of the insulator coating 4-a due to a dielectric polarization phenomenon by applying a high voltage to the needle electrode 4 (here, an example where a negative voltage is applied to the needle electrode 4 is explained), and an electric force that attracts the PMs in the exhaust gas is produced on the outer surface of the insulator coating 4-a due to an electric field generated by this electric potential. If this electric attraction force is larger than a hydrodynamic force that avoids PM adhesion due to a seal gas flow, the PMs are attracted to adhere to the outer surface of the insulator coating 4-a. This electric attraction force is very strong and, according to a result of a test, PM adhesion cannot be completely avoided by the seal gas flow alone.

When the earthed second layer conductor coating 4-b is provided on the first layer insulator coating 4-a on the outer surface of the needle electrode 4 as shown in FIG. 2D, i.e., in a state before the third layer insulator coating 4-c is provided on the outer peripheral surface of the second layer conductor coating, an electric potential is not generated on the outer surface of the second layer conductor coating 4-b because of an electrostatic shield effect as shown in FIG. 2D even if a high voltage is applied to the needle electrode. 4. When the second layer conductor coating 4-b is applied to protrude from the first layer insulator coating 4-a, the needle electrode 4 comes into contact with the second layer conductor coating 4-b, a current directly flows through the second layer conductor coating 4-b from the needle electrode 4, and a function of the first layer insulator coating 4-a is lost. Therefore, in the multilayer coating structure of the needle electrode 4 of the present invention, as shown in FIG. 2B, a region Rc constituted of the first layer insulator coating 4-a alone without the second layer conductor coating 4-b should be present. In this region Rc, the electrostatic shield function is not provided, and the PMs consequently adhere to the regions Rb and Rc extending from the needle electrode distal end 4-1 to a boundary between the second layer conductor coating and the first layer insulator coating 4-a for the above-explained reason. A current flows from the needle electrode distal end 4-1 through the adherent PMs and the earthed second layer conductor coating 4-b, and normal corona discharge is not carried out at the needle electrode distal end 4-1.

In order to avoid the above-explained problem, in the needle electrode member having the multilayer structure according to the present invention, as shown in FIG. 2A and FIG. 2E, the third layer insulator coating 4-c is required-Since the electrostatic shield is realized at a part where the earthed second layer conductor coating 4-b is present, an electrical attraction force no longer functions with respect to the outer surface of the third layer insulator coating 4-c placed at this part, and a hydrodynamic force of the seal gas can completely avoid adhesion of the PMs with respect to the needle electrode middle region in the seal gas potential core region Pc. Even if the PMs adhere to the needle electrode middle region Ra in a region where the seal gas potential core Pc is not exerted, a distance between this part and the outlet of the seal gas tube 5 is far different from a spark generation limit distance in case of a practical application voltage, and hence a spark phenomenon cannot occur. Moreover, a space between the second layer conductor coating 4-b and the needle electrode 4 is insulated by the first layer insulator coating 4-a, the second layer conductor coating 4-b is covered with the third layer insulator coating 4-c, and the outer surface of the second layer conductor coating 4-b is not exposed to an exhaust gas atmosphere as essential requirements. In short, as shown in FIG. 2A and FIG. 2E, the second layer conductor coating 4-b has a sandwich structure electrically insulated from the needle electrode 4 or the exhaust gas atmosphere by the first layer insulator coating 4-a and the third layer insulator coating 4-c except that the second layer conductor coating 4-b is earthed with the apparatus main body through the seal gas tube 5.

The needle electrode 4 according to this embodiment of the present invention emits electrons based on corona discharge in the needle electrode distal end 4-1, when this needle electrode 4 continues corona discharge for a long time in an exposed state, the needle electrode distal end 4-1 reacts with nitrogen in atmospheric air to' generate nitrate, and discharge characteristics are deteriorated. Therefore, in order to realize a maintenance-free state for a long time, a coating for preventing corrosion must be provided. As a coating material, a material having electrical insulation and corrosion resistance, e.g., quartz glass, alumina, or ceramic, is suitable. In regard to a thickness of a coating layer, for example, when the thickness is very thick, an electric field intensity at a coating outer surface becomes less or equal to the corona onset field strength Ec. There is an appropriate thickness that is dependent on a shape of the electrode, a voltage applied to the needle electrode, or exhaust gas conditions, but a thickness of approximately 0.1 to 0.5 mm is practically sufficient. As explained above, this needle electrode 4 is covered with the insulating material over the entire length from the middle region to the distal end region, and a basic difference in coating conditions between the middle region and the distal end region lies in a coating thickness level. It is desirable to select a thick coating in the middle region to avoid dielectric breakdown due to a spark and select a thin coating in the distal end region in such a manner that electric field intensity becomes less or equal to the corona onset field strengh Ec. Further, although the needle electrode 4 in the above-explained embodiment has the three-layer structure as a conformation of the multilayer coating, this structure does not obstruct covering the needle electrode according to the present invention with coating layers formed of four or more layers. It is to be noted that the coating in a region Rd provided in the innermost part, of the seal gas tube 5 of the needle electrode member may be the first layer insulator coating 4-a alone. That is because the vicinity of the outlet of the seal gas tube 5 has the multilayer coating structure as explained above and the PMs cannot enter the seal gas tube 5 from the outlet of the seal gas tube 5 due to a structure thereof. A shape of the needle electrode according to the present invention that produces corona discharge is not specified in case of a non-uniform electric field, and a structure having a small ball or an electrode short wire provided at an electrode distal end (not shown) can be selected, for example.

In the embodiment based on the present invention, as means for facilitating charge of the corona electrons 10, the exhaust gas guide tube 7 is provided in the main body wall 1-1 in a protruding condition so that an exhaust gas G1 flows in the vicinity of the distal end of the needle electrode 4. As a relationship between an internal diameter $\phi 1$ of the main body wall 1-1 region and an internal diameter $\phi 2$ of the exhaust gas guide tube 7, $\phi 2/\phi 1 <$ approximately 0.5 is preferable. In order to effectively collect the particulate matters S, it is preferable to set a relationship between a distance La between the distal end of the needle electrode 4 and the collection plate 3 and a distance Lb between the distal end of the needle electrode 4 and the main body inner wall to La<Lb. In the apparatus according to the present invention, an inner wall surface of this main body wall 1-1 can function as a collection surface of the particulate matters S, and bonding a later-explained collection plate 71-1 depicted in FIG. 10 to the inner wall surface of the main body wall 1-1 can also provide the collection surface.

The outlet of the seal gas tube 5 from which a seal gas G2 flows out is arranged to face a downstream side of a flow of the exhaust gas G1 as shown in FIG. 2A to avoid contamination of the needle electrode 4. A ratio of a flow velocity Qs (FIG. 2) of the seal gas G2 flowing through the seal gas tube 5 with respect to an average flow velocity Qo of the exhaust gas G1 flowing outside the seal gas tube 5 (Qs/Qo) is set to 0.15 or above, thereby avoiding entrainment of the exhaust gas G1 into the seal gas tube 5. It is to be noted that a gas having insulation, e.g., air can be used as the seal gas G2.

It is desirable to set a protrusion length L of the needle electrode 4 from the distal end of the seal gas tube 5 in the apparatus main body to be placed within the potential core Pc of the seal gas G2 flow in the seal gas tube 5 while considering contamination of the needle electrode 4 as shown in FIG. 2A, but the vicinity of the needle electrode distal end section 4-1 is not prevented from protruding outside the downstream side of the potential core Pc, and the practical protrusion length L falls within the range of 50 to 200 mm although it varies depending on an internal diameter D of the seal gas tube 5. It is to be noted that, as to the potential core Pc in this embodiment, a uniform conical flow field having the same flow velocity and the same gas component as those in a nozzle is generated at the outlet of the seal gas tube 5 when the seal gas G2 (a fluid) belches out from the seal gas tube 5, and a region formed by this conical flow field is called the potential core.

In case of a flow of a gas belching out from a tube having an internal diameter D, a length of the region of the potential core Pc is usually approximately fivefold of the internal diameter D of seal gas tube 5. As the internal diameter D of the seal gas tube 5, it can be selected an internal diameter dimension with which a spark does not occur with respect tq the PMs that have adhere to the seal gas tube outer peripheral surface from the needle electrode 4 at the seal gas tube outlet. When a voltage of several ten thousand volts is applied, it is preferable to set the practical internal diameter D of the seal gas tube 5 to approximately 20 to 100 mm although it varies depending on a flow rate of the exhaust gas.

In the electrical processing apparatus for a diesel engine exhaust gas according to the first embodiment of the present invention, as shown in FIG. 3, a stabilizing plate 5-1 formed of such as a plate member or a honeycomb member, is arranged in the seal gas tube 5 as means for further stabilizing a flow of the seal gas at the outlet of the seal gas tube 5, but the stabilizing plate 5-1 does not have to be necessarily provided over the entire length of the seal gas tube 5, and it may be provided only at a part where a direction of a gas flow varies, e.g., a bent region of the seal gas tube 5. A function of this stabilizing plate 5-1 further stabilizes a flow of the seal gas at the outlet of the seal gas tube 5, thereby forming the very stable potential core Pc at the outlet region of the seal gas tube 5.

Further, a dummy tube region 5-2 protruding toward the upstream side of the exhaust gas path 1 can be provided at the bent part of the seal gas tube 5 for the same reason as shown in FIG. 4, thereby stabilizing a gas flow in the seal gas tube 5 based on a function of the dummy tube 5-2. Here, as a result of conducting various kinds of experiments for achieving conditions of stabilizing a seal gas flow, it was revealed that respectively setting a length L2 of the dummy tube region 5-2 of the seal gas tube 5 region and a length L1 from the dummy tube region to the distal end region to L1/D>1 and L2/D>0.5 can suffice, where D is an internal diameter of the seal gas tube 5. An internal diameter di of the dummy tube region 5-2 may be a diameter larger than or smaller than the internal diameter D of the seal gas tube 5. Like the seal gas tube including the stabilizing plate 5-1, a function of this dummy tube region 5-2 stabilizes a seal gas flow at the outlet of the seal gas tube 5, thereby forming the very stable potential core Pc at the outlet region of the seal gas tube 5. Incidentally, it can be considered that the seal gas flow is stabilized by providing the dummy tube region 5-2 to the seal gas tube 5 because a so-called buffer effect which attenuates a fluctuation in pressure in a seal gas tube cross section caused due to bending a flow of the seal gas occurs. Furthermore, L1/D>1.5 and L2/D>0.5 are set because an influence of bending a seal gas flow is not eliminated when L1/D is less than 1.5 and the sufficient buffer effect cannot be obtained when L2/D is less than 0.5. It is to be noted that a facet of the dummy tube region 5-2 on the upstream side is not restricted to a flat shape and it may be a semicircular shape or an elliptic shape bulging toward the upstream side.

On the other hand, supply of the seal gas is stopped when an engine is shut off. As to a seal gas stop timing, it is desirable to stop the seal gas after a brief interval from shutting off the engine. When both the engine and the seal gas are simultaneously stopped, the exhaust gas remaining in the exhaust gas tube or the collection device may possibly enter the seal gas tube 5 to contaminate the inside of the seal gas tube or the needle electrode 4. Moreover, in regard to a direction of the seal gas tube 5 when it is inserted into the collection device main body, it is desirable to insert the seal gas tube 5 from an upper side toward a lower side because dews formed at the time of dew condensation of the exhaust gas can flow out toward the outlet side of the seal gas tube.

Additionally, in the apparatus according to the present invention, the collection plate 3 arranged on the downstream side of the needle electrode 4 is of a type which is arranged in such a manner that a collection surface becomes vertical to a flow of the exhaust gas, generates an electric field between a direct-current voltage of the needle electrode 4 and the collection plate, and collects PMs 8, charged in the discharge and charge region 2, by using a coulomb force. In this embodiment, three types, i.e., punching metal type collection plates 3a and 3b depicted in FIGS. 5 and 6, and a slit type collection plates 3c shown in FIG. 7 can be exemplified. Each of the punching metal type collection plates 3a and 3b depicted in FIGS. 5 and 6 has many through holes 3a-1 or 3b-1 formed in a single plate. Of these collection plates, the collection plate 3b depicted in FIGS. 6 has each protruding flange (a burring wall) 3b-2 provided around each through hole 3b-1 and providing the protruding flange 3b-2 enables forming a swirling current or a stagnation in a gas flow, thereby further improving a collection efficiency of the charge PMs 8. A height h of this protruding flange 3b-2 may be practically approximately 0.1 to 5 mm.

In case of the punching metal type collection plates 3a and 3b depicted in FIGS. 5 and 6, assuming that an opening area of the through hole 3a-1 is S and the number of the holes is N, a total area of the opening regions is NS. Assuming that a substantial front area of the collecting region is SO, a rate of the hole area can be defined as (the opening region total area NS)/(the collection region substantial front area SO). Further, in case of the slit type collection plate 3c, like the punching metal type collection plate 3a, a rate of the hole area can be defined as (a slit opening region total area NS)/(a collecting region substantial front area SO). It is desirable to set both the rate of the hole area in the punching metal type collection plate and that in the slit type collection plate to 3 to 20%. When the rate of the hole area is less than 3%, a collection amount of the PMs 8 is increased, but a pressure drop becomes large. When the rate of the hole area exceeds 20%, a sufficient collection amount of the PMs 8 cannot be obtained.

In the embodiment apparatus according to the present invention, although a low average flow velocity of the exhaust gas G1 flowing through the collection region is desirable in terms of a collection efficiency, a lateral cross-sectional area with which the collection region substantial front area SO becomes 1.5-fold or above of a lateral cross-sectional area of the exhaust gas guide tube 7, and the average flow velocity of the exhaust gas G1 flowing through the collection region becomes 20 m/sec or below is practically desirable.

Although a material of each of the collection plates 3a, 3b, and 3c is not restricted in particular, using a ferrite-type stainless steel plate or an austenitic stainless steel superior in corrosion resistance, or a metal plate formed of such as nickel-chrome steel as a heating element is preferable. Furthermore, the collection plate 3a, 3b, or 3c can be coated with a washcoat layer to support a catalyst.

It is to be noted that a front shape of the collection plate 3 is not restricted in particular as long as it is a shape allowing the exhaust gas G1 to flow without resistance, it can be usually determined in accordance with a cross-sectional shape of the apparatus main body region , e.g., a circular shape, a square shape or any other shape.

In the apparatus according to the first embodiment based on the present invention depicted in FIG. 1, when a direct-current high voltage that is several ten thousand volts is applied to the needle electrode 4 from the high-voltage power supply device 6, a corona discharge phenomenon occurs at the needle electrode distal end 4-1 to emit the corona electrons 10, and the PMs 8 in the exhaust gas G1 flowing through a space in the discharge and charge region 2 are charged with the corona electrons 10. At this time, the direct-current voltage applied to the needle electrode 4 is set and supplied in such a manner that an electric field intensity near the electrode distal end becomes equal to or above the corona onset field strength, and a set value of the direct-current voltage varies depending on conditions of the exhaust gas G1 (a flow velocity, a PM content, a temperature, and others), but approximately 20 to 70 kV is practically sufficient.

In the exhaust gas processing apparatus of the embodiment based on the present invention, the charged PMs 8 once collected on each collection plate do not fall off. due to a gravitational force or a hydrodynamic force of a gas flow, and its factor is characteristics of fine particle adhesion. In case of a particle having a particle diameter of 30 $\mu$m or below, an adhesion force based on a van del Waals force becomes larger than the gravitational force, and its ratio becomes extremely large (100-fold or above) when the particle diameter is 2.5 $\mu$m or below which is said to be harmful to humans, and the collected PMs 8 do not fall off by vibrations and others during traveling.

Since the collection region in the exhaust gas processing apparatus according to the embodiment has a structure where a pressure drop is very small, a trouble involved by the pressure drop rarely occurs even if the PMs 8 are deposited on each collection plate. In a normal driving state, when an exhaust gas temperature is increased due to high-speed driving or high-load driving, etc., the PMs 8 are naturally subjected to combustion- However, when a traffic jam continues for a long time in an urban district etc., the PMs 8 cannot be naturally subjected to combustion. In such a situation, the PMs 8 deposited on each collection plate can be forcibly subjected to combustion by electrical heating.

FIG. 8 shows an example of PM combusting means of the collection plate in the embodiment apparatus according to the present invention. As a material of the collection plate 3, a thin plate formed of such as ferrite-type stainless steel or austenitic stainless steel superior in heat resistance and corrosion resistance, or nickel-chrome steel as a heating element is used, and the collection plate 3 is utilized as a heater. As a combustion method for the PMs on the collection plate 3, a changeover switch 40 is disposed at an end of the holding rod 3-1 of the collection plate 3. When electrically heating the collection plate 3, this switch can be connected to a terminal 40a on a heater power supply device 41 side. When collecting the PMs, the switch can be connected with a terminal 40b on an earth side. Since a necessary power for this electrical heating is as small as 1 to 4 KW, a battery or the like mounted on a vehicle can be used as the heater power supply, and the PMs 8 collected on the collection plate 3 can be safely subjected to combustion at a temperature of approximately 650 to 700°C without generating flames. It is to be noted that disposing a temperature gauge (not shown), e.g., a thermo couple to the collection plate 3 and controlling a temperature at the time of electrical heating to avoid an unnecessary increase in temperature is desirable. In addition, electrical insulation of the holding rod 3-1 of the collection plate 3 is basically coated by such as quartz glass, alumina, or ceramic, which have electrical insulation and corrosion resistance, like the case of insulation of the needle electrode 4 in the embodiment. The holding rod 3-1 is disposed in a holding rod seal tube 9 made of electric insulator such as alumina and ceramic; and the seal gas G2 having insulation properties, such as air, flows in the holding rod seal tube 9.

According to the first embodiments of the present invention, the PMs in the exhaust gas from the diesel engine can be basically collected. An electric resistivity p may be reduced depending on combustion conditions of the diesel engine. In such a case, the collection plate cannot sufficiently cope with this situation. Thus, according to another embodiment of the present invention, a cyclone precipitator is additionally provided on a rear stage of the exhaust gas electrical processing apparatus. In the exhaust gas from the diesel engine, an electric resistivity p of the PM greatly fluctuates depending on driving conditions. There are both a PM having a high electric resistivity p and a PM having a low electric resistivity ρ. In general, there is a tendency that the electric resistivity p is small in high-temperature combustion during high-speed driving and the electric resistivity p is large in low-temperature combustion. Therefore, means for removing the PM contained in the exhaust gas from the diesel engine must have performance enabling efficient collection of not only the PM having the high electric resistivity p but also the PM having the low electric resistivity p. Accordingly, the present invention provides the electrical processing apparatus for the exhaust gas from the diesel engine that can sufficiently cope with a case where the electric resistivity p is high or low by additionally providing the cyclone precipitator on the rear stage of the exhaust gas electrical processing apparatus.

As shown in FIG. 9, a second embodiment apparatus according to the present invention is an electrical processing apparatus for a diesel engine exhaust gas that can sufficiently cope with a case where the electric resistivity p is high or low. A cyclone precipitator 62 is arranged on the rear stage of an exhaust gas electrical processing apparatus 61 having substantially the same structure as the above examples. Each collection plate 71-1 in this exhaust gas electrical processing apparatus 61 is arranged in such a manner that its collection surface becomes substantially vertical to a flow of the exhaust gas. As shown in FIG. 10A in an enlarging manner, the collection plate 71-1 is constituted of a base plate 71-1a alone formed of a single plate without an opening in a collection surface thereof, or the base plate 71-1a and a lattice-like fin 71-1b provided on a collection surface side of the base plate 71-1a. The collection plates 71-1 are arranged at appropriate intervals in such a manner that a gap 61-2 through which the exhaust gas flows can be formed between each collection plate 71-1 and an inner wall of a main body wall 61-1 of the exhaust gas electrical processing apparatus 61. Since a size of this gap 61-2 does not affect a collection efficiency, determining the size while considering a pressure drop can suffice. The lattice-like fin 71-1b is provided to the collection plate 71-1 in order to efficiently collect charged PMs on the base plate 71-1a by producing a stagnation effect in a flow of a gas G1.

As practical dimensions of the lattice-like fin 71-1b, it is good enough for a height of the lattice to fall within the range of 3 to 10 mm and a width of the lattice to fall within the range of 10 to 30 mm. Moreover, a shape of the lattice is not necessarily restricted to a square shape, and it may be a honeycomb hexagon. Additionally, as a material of the lattice-like fin 71-1b, an insulator, e.g., ceramics is preferable. That is because electric force lines are concentrated on a distal end of the lattice-like fin 71-1b close to the distal end of the needle electrode 4 when the lattice-like fin 71-1b is made of a metal, and hence the charged PMs flow toward' the distal end of the lattice-like fin 71-1b. Since a flow of the gas G1 is fast at this part, the PMs are hard to reach the base plate 71-1a, and they are apt to be entrained and flowed rearwards without being collected, and hence a collection efficiency in the base plate 71-1a is deteriorated. It is to be noted that, in the main body of the exhaust gas electrical processing apparatus 61 according to this embodiment depicted in FIG. 9, a plate with a guide hole 61-3 that facilitates a flow of the exhaust gas G1 may be installed on the upstream side, and a plate with a guide hole 61-3 that facilitates a flow and collection of the PMs and an electric field plate 61-4 intended to give an electric field may be installed between the collection plate 71-1 and the collection plate 71-1. In this case, a high voltage is supplied to the electric field plate 61-4 from a high-voltage power supply device (not shown). Furthermore, it is desirable to cover the electric field plate 61-4 with an insulating material.

In the second embodiment apparatus, the base plate 71-1a constituting the collection plate 71-1 has a two-layer structure comprising an insulator material such as ceramics , and a conductor material such as stainless steel plate. In the two-layer structure, as shown in FIG. 10B, an insulator material 71-1a-1 is arranged on a surface facing the needle electrode for corona discharge, i.e., a collection surface for the charged PMs, and an earthed conductor material 71-1a-2 is arranged on a rear surface thereof.

According to the base plate 71-1a having the two-layer structure of this example, electric force lines (an electric field) emitted from the needle electrode reach the conductor material 71-1a-2 through the insulator material 71-1a-1. As a result, the charged PM particles move toward the base plate 71-1a based on a coulomb force of the electric field and reach a wall surface of the insulator material 71-1a-1 of the base plate 71-1a. As explained above, in regard to the PMs that have once reached the wall surface of the insulator material 71-1a-1, electrified charges are trapped on the wall surface constituted of the insulator and their adhesion force with respect to the wall surface is maintained for a long time, thereby enabling efficient collection and deposition of the PMs. In this manner, the base plate 71-1a having the two-layer structure according to this example can efficiently collect the PMs irrespective of the high or low electric resistivity p of the PMs. It is to be noted that the both faces of the earthed conductor material 71-1a-2 may be coated with the insulator material 71-1a-1.

Sorting out a PM collection mechanism of the base plate 71-1a in the second embodiment apparatus with reference to a document about a conventional theory in electrostatic collection ("Shinpan Seidenki Handbook": the first edition, edited by The Institute of Electrostatic Japan, issued in November, 1998), it is known that there is an appropriate range for the electric resistivity p of a fine particle as a collection target in order to obtain an excellent collection efficiency in electrostatic collection. That is, in a page 49 in "Seidenki Handbook" is written that the appropriate range is $10^4$ $\Omega \cdot cm <$ appropriate $\rho < 10^{11}$ $\Omega \cdot cm$. When the electric resistivity p is lower than $10^4$ $\Omega \cdot cm$, a so-called re-entrainment phenomenon occurs. According to this phenomenon, a particle reaches a collection plate, e.g., an iron plate, then an electrified charge is immediately lost as well as electrical adhesion since the electrical resistivity is low, and the particle is entrained. Contrary, when the electric resistivity is higher than $10^{11}$ $\Omega \cdot cm$, it is known that a so-called back corona phenomenon occurs and a collection efficiency is consequently lowered. According to this phenomenon, excessive charges are stored since the electric resistivity of a particle layer deposited on the collection plate is high, a spark is produced between the particle layer and the collection layer, and the particle is entrained. Further, in general, in an exhaust gas from a diesel engine, it is said that the electric resistivity p of each PM is lower than an appropriate value and collection cannot be performed based on electrostatic collection since a re-entrainment phenomenon occurs. As a result of measuring the electric resistivity p by the present inventor, it was confirmed that the electric resistivity is approximately $10^2$.to $10^3$ $\Omega \cdot cm$ in the engine used in a test and this value deviates from the range of electric resistivity p suitable for electrostatic collection toward a lower value. It is to be noted that a method explained in "Seidenki Handbook" (page 486, FIGS. 13 and 20) was adopted as a method of measuring the electric resistivity p.

According to a test method adopted in the second embodiment apparatus depicted in FIG. 9, the exhaust gas from the diesel engine was led to the exhaust gas processing apparatus according to the second embodiment through a gas pipe to collect and remove the PMs, and then the exhaust gas was discharged to outside air. Main devices used in the test are, a diesel engine, a dynamometer, a smoke meter, and a pressure gauge. A car engine (an engine mounted on Elf by Isuzu, 4HF1 model, 4300 CC) was used as the diesel engine, a predetermined torque and a predetermined number of revolutions were given by the dynamometer (an eddy-current type dynamometer manufactured by Meidensha Corporation) as a load for the engine, an optical smoke meter (MEXA-130S manufactured by Horiba Ltd.) was used to measure a smoke density of the exhaust gas, a collection efficiency η was calculated from the following definitional equation, and a pressure drop of the exhaust gas processing apparatus was calculated from a differential pressure measured by the pressure gauge installed on each of an inlet side and an outlet side of the exhaust gas processing apparatus. The collection efficiency is defined as represented by the following expression:

```
Collection efficiency={1-(exhaust gas smoke density after passing through the exhaust gas processing

apparatus)/(exhaust gas smoke density from engine)}×100(%).
```

As to operating conditions of the engine, fixed load conditions where the number of revolutions is 1100 rpm and a torque = 170 N-m were set, and a diesel oil (JIS No. 2) was used as a fuel. As to main dimensions of the electrical processing apparatus 61 for the exhaust gas, a width is 200 mm, a height is 200 mm, and a length is 250 mm. As to main dimensions' of the cyclone precipitator 62, an internal diameter of a cylinder is 185 mm and a height is' 800 mm. As a direct-current voltage to the needle electrode, a voltage of -40,000 volts was applied.

Progression of the test conducted in the second embodiment apparatus depicted in FIG. 9 will now be explained in more detail. First, a conductor (a stainless steel plate) was used for each of the base plate 71-1a of the collection plate and the main body internal wall 61-1 to conduct the test. As a result, the PMs seemingly rarely adhered to the collection plate and the main body inner wall even after elapse of approximately 30 hours in total from start of the test, achievement of the collection efficiency was hardly obtained, and it seemed that the conventional theory was backed up at this stage. However, when the surface of the collection plate was observed in detail, it was observed that the PMs adhered to the wall surface although it was a very small amount. Then, when the collection test was further continued, as a result, the present inventor discovered a phenomenon that the PM adhesion amount was increased at an accelerated pace. In a visual expression, there is an aspect that "the PM attracts another PM", i.e., "soot attracts soot", and the collection efficiency consequently reached a considerably high level, i.e., approximately 35%.

This phenomenon can be explained as follows. That is, when the PM adhesion amount is increased and an adhesion layer reaches a certain amount of thickness, it can be considered that the electric resistivity p of the deposition layer becomes relatively high even though the electric resistivity p of each particle is low. As a result, it is considered that the conditions of the resistance value suitable for electrical collection are insufficiently satisfied. However, the higher collection efficiency cannot be obtained, and it was presumed that the resistance value suitable for electrical collection is not reached yet at this stage, hence adherence of the deposition layer is weak and this layer is apt to be peeled off.

Paying attention to the test result, the inventor decided to adopt the two-layer structure as the structure of the base plate 71-1a as shown in FIG. 10B. That is, the insulator material 71-1a-1, e.g., ceramics is arranged on a surface facing the needle electrode for corona discharge, and the conductor material 71-1a-2, e.g., earthed stainless steel is arranged on the rear surface. According to the base plate structure depicted in this drawing, electric force lines (an electric field) emitted from the needle electrode pass through the insulator material 71-1a-1 to reach the conductor material 71-1a-2, consequently the charged PM particles move toward the base plate 71-1a based on a coulomb force of the electric field to reach the wall surface of the base plate 71-1a-1. As to the PMs that have once reached the walls surface of the base plate 71-1a-1, since the collection surface is made of the insulator material 71-1a-1, and, charges that have electrified the PMs are trapped to maintain adherence with respect to the wall surface for a long time, thereby efficiently collecting and depositing the PMs. In this manner, the base plate 71-1a having the two-layer structure enables efficiently collecting the PMs even if the electric resistivity p of the PMs is high or low. Furthermore, it is desirable to form the lattice-like fin 71-1b of an insulator, e.g., ceramics, and also desirable to adopt the same two-layer structure as the base plate 71-1a for the inner wall in the main body wall 61-1. That is, when the main body inner wall surface that comes into contact with the exhaust gas is formed of the insulator material and the earthed conductor material is arranged on the rear surface thereof, the charged PM particles can be efficiently collected on the main body inner wall surface. As a result, a satisfactory result, i.e., approximately 70 to 80% as the collection efficiency can be achieved. It is to be noted that the continuous test for long time of 30 hours was conducted three times under such conditions, and it was confirmed that the high collection efficiency, 70 to 80%, can be achieved in all of the tests carried out three times. Further, according to the base plate 71-1a having the two-layer structure depicted in FIG. 10, it was also confirmed that the high collection efficiency can be achieved immediately after start of the test. Moreover, a pressure drop in the exhaust gas processing apparatus was a fixed low value that is approximately 5 kPa during the test period.

In case of the electrical processing apparatus for the diesel engine exhaust gas based on the second embodiment depicted in FIGS. 9 and 10 and the test using this embodiment apparatus, when a deposition amount of the PMs collected on the base plate 71-1a is increased to exceed a given limit amount (the deposition thickness of about 1 mm), the PMs naturally fall off, and the fallen PMs each of which is a coarsened particle are collected by the cyclone precipitator 62 arranged on the rear stage of this exhaust gas electrical processing apparatus 61. In the second embodiment, the PMs are collected and deposited on the base plate 71-1a of the collection plate, then the deposition layer falls off, and the PMs as coarsened particles that have fallen off are finally collected by the cyclone precipitator 62 provided at the rear stage. It was revealed from a result of observing the test that repetition of these operations is a collection mechanism of the second embodiment. It was also confirmed that a time interval of falling is approximately two to three hours under the test conditions. The PMs collected by the cyclone precipitator 62 may be periodically taken out to be collected, or a heater may be disposed in the cyclone precipitator to burn the PMs during driving or shutoff.

It is to be noted that a particle agglomeration tube 80 having a honeycomb structure is disposed on a front stage of the cyclone precipitator 62 as such particle agglomeration coarsening means as shown in FIG. 11 in association with the exhaust gas electrical processing apparatus 61 according to this embodiment. The particle agglomeration tube 80 utilizes an agglomeration effect based on a velocity gradient of a flow of the gas G1 When the exhaust gas is passed through this particle agglomeration tube 80 having a honeycomb structure, cohesion-agglomeration is efficiently carried out with a velocity gradient of a boundary layer generated at this moment. Further, a particle agglomeration plate 90 depicted in FIG. 12 utilizes an agglomeration effect based on a turbulent flow. When a plurality of (three in this example) of punching metals 90-1 are arranged at desired intervals and the exhaust gas G1 is passed through the particle agglomeration plate 90 formed of the three punching metals 90-1, a strong turbulent flow is produced and cohesion-agglomeration is efficiently carried out. As a method of provoking the cohesion-agglomeration based on a turbulent flow, a material obtained by three-dimensionally bundling wire sheets or thin metallic wires can be used in place of the punching metals, for example. In the embodiment according to the present invention, since the PM particles exiting from the exhaust gas electrical processing apparatus 61 can be grown into larger particles by using the particle agglomeration coarsening means, e.g., the particle agglomeration tube 80 having the honeycomb structure or the particle agglomeration plate 90, the collection efficiency in the cyclone precipitator 62 provided at the rear stage can be greatly improved.

On the other hand, as a method of maintaining each collection plate, i.e., the collection plate 3, 3a, 3b, 3c, or 71-1 disposed in the electrical processing apparatus for the exhaust gas according to the embodiments of the present invention, as depicted in FIG. 13 showing an embodiment of this method, a bypass duct 55 in which an exhaust gas electrical processing apparatus is not present is additionally arranged between an upstream side and a downstream side of the exhaust gas electrical processing apparatus 61, and a switching valve V provided in the exhaust gas duct on the upstream side can be used to control a flow of the exhaust gas, thereby performing PM collection and maintenance. That is, when the exhaust gas electrical processing apparatus 61 is used to collect PMs 8, the switching valve V is changed over to use an A route. When maintenance of the collection plate is performed, the switching valve V is changed over to use a B route of the bypass duct 55. It is to be noted that the exhaust gas electrical processing apparatus is not present in the bypass duct 55 in the B route, and hence the PMs are discharged without being collected when this route is used. Since a maintenance time of the collection plate is relatively a short time, it was confirmed that an actual harm, e.g., air pollution, is substantially vanishingly small.

It is to be noted that, besides the maintenance method depicted in FIG. 13, there are also a method of disposing the exhaust gas electrical processing apparatus' 61 in the bypass duct 55 of the B route to alternately carry out collection and maintenance, a method of disposing the two exhaust gas electrical processing apparatuses 61 in series to alternately carry out collection and maintenance, and others although not shown. Of these methods, the method of disposing the two exhaust gas electrical processing apparatuses 61 in series increases the collection efficiency of the PMs B and also enables collection by one exhaust gas electrical processing apparatus even if the other apparatus fails to operate, and hence this method is safe and excellent in terms of an air pollution prevention countermeasure.

On the other hand, as shown in Fig. 14, it is possible to adopt a structure where the exhaust gas electrical processing apparatuses 61 are arranged in parallel, the cyclone precipitator 62 is arranged on a downstream side of these apparatuses, and a switching valve V1 provided on an upstream side of a flow of the exhaust gas G1 is actuated to control the flow of the exhaust gas G1, thereby alternately using both the exhaust gas electrical processing apparatuses. In this case, one exhaust gas electrical processing apparatus 61 continues its original operation to collect the PMs, and the other electrical processing apparatus 61 is subjected to maintenance. Moreover, the two exhaust gas processing apparatuses provided in parallel can be simultaneously used to collect the PMs, and three or more exhaust gas processing apparatuses 61 can be further arranged in addition to the structure depicted in FIG. 14.

Explanation of Industrial Applicability of the Invention

The electrical processing apparatus for a diesel engine exhaust gas according to the present invention can of course assuredly perform collection and combustion of PMs in an exhaust gas, efficiently remove harmful gas components other than the PMs by combining various kinds of catalytic technologies therewith, effectively collect PM particles by combining a cyclone precipitator or a particle agglomeration coarsening means therewith, and also realize an ideal maintenance-free configuration. Therefore, the electrical processing apparatus for a diesel engine exhaust gas can be extensively applied to not only marine vessels, electric generators, large construction machines, and automobile diesel engines but also collection processing for various kinds of exhaust gases containing harmful components, thereby greatly contributing to pollution prevention caused due to air pollution.

Explanation of References

| 1 | exhaust gas path |
|---|---|
| 1-1, 61-1 | main body wall |
| 2 | discharge and charge region |
| 2-1 | corona discharge region |
| 2-2 | charge region |
| 3, 3a, 3b, 3c. | 71-1 collection plates |
| 4 | needle electrode |
| 4-a | first layer insulator coating |
| 4-b | second layer conductor coating |

| 4-c | third layer insulator coating |
|---|---|
| 4-d | earth conductor wire |
| 5 | seal gas tube |
| 5-1 | stabilizing plate |
| 5-2 | dummy tube region |
| 6 | high-voltage power supply device |
| 7 | exhaust gas guide tube |
| 8 | particulate matter (PM) |
| 9 | holding rod seal tube |
| 10 | corona electrons |
| 40 | changeover switch |
| 40a, | 40b terminal |
| 41 | heater power supply device |
| 61 | exhaust gas electrical processing apparatus |
| 55 | bypass duct |
| 62 | cyclone precipitator |
| 80 | particle agglomeration tube |
| 90 | particle agglomeration plate |
| G1 | exhaust gas |
| G2 | seal gas |
| Pc | potential core |
| V, V1 | switching valve |

**Claims**

1. An electrical processing method for a diesel engine exhaust gas which removes particulate matters mainly containing carbon included in a diesel engine exhaust gas by electrical means, **characterized by** providing a needle electrode (4) whose outer periphery is covered with a coating having a multilayer structure is arranged on an upstream side of an exhaust gas path in an electrical exhaust gas processing apparatus providing, a discharge and charge region comprising a corona discharge region (2-1) that emits electrons based on corona discharge by the needle electrode (4) and a charge region (2-2) that charges the particulate matters with the emitted electrons, charging the particulate matters in an exhaust gas in the charge region with the electrons corona-discharged in the corona discharge region (2-1), and arranging a collection region on a downstream side of the exhaust gas path which collects the charged particulate matters, wherein the coating having the multilayer structure that covers the outer periphery of the needle electrode is formed of a first layer insulator coating (4a) made of an insulator, a second layer conductor coating (4b) made of a conductor that covers an outer side of the first layer insulator coating, and a third layer insulator coating (4c) that covers an outer side of the second layer conductor coating (4b) with an insulator.

2. An electrical processing apparatus for a diesel engine exhaust gas which removes particulate matters mainly containing carbon included in a diesel engine exhaust gas by electrical means, comprising a needle electrode (4) arranged on an upstream side of an exhaust gas path (1) in the processing apparatus main body, a discharge and charge region (2) comprising a corona discharge region (2-1) that emits electrons (10) based on corona discharge by the needle electrode (4) and a charge region (2-2) that charges the particulate matters with the emitted electrons (10) is provided, and a collection region that collects the charged particulate matters is arranged on a downstream side of the exhaust gas path (1), and **characterised in that** the needle electrode (4) has an outer periphery covered with a coating having a multilayer structure, wherein the coating having the multilayer structure that covers the outer periphery of the needle electrode is formed of a first layer insulator coating (4a) made of an insulator, a second layer conductor coating (4b) made of a conductor that covers an outer side of the first layer insulator coating (4a), and a third layer insulator coating (4c) that covers an outer side of the second layer conductor coating (4b) with an insulator.

3. The electrical processing apparatus for a diesel engine exhaust gas according to claim 2, wherein the first layer insulator coating (4a) and the third layer insulator coating (4c) of the needle electrode (4) are formed of such as quartz glass, alumina, or ceramics, and the second layer conductor coating (4b) of the same, is formed of a conductor, such as a metal tube having a small wall thickness or a wire sheet.

4. The electrical processing apparatus for a diesel engine exhaust gas according to any one of claims 2 or 3, wherein the needle electrode (4) of the corona discharge region is inserted and arranged in a seal gas tube (5) formed of an insulator and a distal end of the needle electrode (4) faces a downstream side of an exhaust gas flow (1) and is arranged to be placed in a potential core of a seal gas flow or on a downstream side of the potential core, thereby discharging corona electrons (10) toward the downstream side.

5. The electrical processing apparatus for a diesel engine exhaust gas according to any one of claims 2 to 4, wherein a stabilizing plate (5-1) is arranged in a part or all of the seal gas tube (5), and a plate-shaped member or a honeycomb-shaped member is used for the stabilizing plate.

6. The electrical processing apparatus for a diesel engine exhaust gas according to any one of claims 2 to 5, wherein a dummy tube region (5-2) is provided on a tube wall placed on an opposite side of a needle electrode (4) distal end side of the seal gas tube (5) in parallel with a direction of the exhaust gas flow, and the seal gas tube (5) having the dummy tube region (5-2) satisfies conditions of L1/D > 1.5 and L2/D > 0.5, where D is an internal diameter of the seal gas tube, L2 is a length of the dummy tube region in the seal gas tube region, and L1 is a length from the dummy tube region to the distal end region.

7. The electrical processing apparatus for a diesel engine exhaust gas according to any one of claims 2 to 6, wherein a cyclone precipitator (62) is additionally provided on a rear stage of the electrical processing apparatus for an exhaust gas.

8. The electrical processing apparatus for a diesel engine exhaust gas according to claim 7, wherein the collection region of the electrical processing apparatus for an exhaust gas is constituted by arranging one or more collection plates (3) each of which is formed of either a base plate (71-1a) made of one plate having no opening on a collection surface or a combination of the base plate made of one plate and a lattice-like fin (71-1b) provided on the collection surface side of the base plate (71-1a) so as to form a gap between the collection plates (3) and the apparatus main body inner wall, and the base plate has a two-layer structure by arranging an insulator material on the collection surface and an earthed conductor material on a rear surface.

9. The electrical processing apparatus for a diesel engine exhaust gas according to claims 7 or 8, wherein particle agglomeration coarsening means is arranged on a front stage of the cyclone precipitator, and either a particle agglomeration tube (80) having a honeycomb structure or a particle agglomeration plate (90) constituted by arranging a plurality of punching metals or wire sheets at predetermined intervals is used as the particle agglomeration coarsening means.

**Patentansprüche**

1. Elektrisches Verarbeitungsverfahren für Abgase von Dieselmotoren, bei welchem hauptsächlich Kohlenstoff enthaltender Feinstaub in den Abgasen von Dieselmotoren mittels elektrischer Einrichtungen entfernt wird, **gekennzeichnet durch** die Bereitstellung einer Nadelelektrode (4), deren Außenumfang mit einem Überzug bedeckt ist, der eine mehrlagige Struktur aufweist, die auf einer stromaufwärtigen Seite eines Abgaspfades in einer elektrischen Abgasverarbeitungsvorrichtung angeordnet ist, die Bereitstellung eines Entlade- und Ladebereichs, der einen Koronaentladebereich (2-1) aufweist, der Elektronen auf der Grundlage von Koronaentladung **durch** die Nadelelektrode (4) abgibt, und eines Ladebereichs (2-2), der den Feinstaub mit den abgegebenen Elektronen lädt, das Laden des Feinstaubs in einem Abgas in dem Ladebereich mit den koronaentladenen Elektronen in dem Koronalentladebereich (2-1) und die Anordnung eines Sammelbereichs auf einer stromabwärtigen Seite des Abgaspfades, der den geladenen Feinstaub sammelt, wobei der die mehrlagige Struktur aufweisende Überzug, der den Außenumfang der Nadelelektrode bedeckt, aus einer ersten Isolatorüberzugslage (4a), die aus einem Isolator hergestellt ist, einer zweiten Leiterüberzugslage (4b), die aus einem Leiter hergestellt ist, die eine Außenseite der ersten Isolatorüberzugslage bedeckt, und einer dritten Isolatorüberzugslage (4c) gebildet ist, die eine Außenseite der zweiten Leiterüberzugslage (4b) mit einem Isolator bedeckt.

2. Elektrische Verarbeitungsvorrichtung für Abgase von Dieselmotoren, welche hauptsächlich Kohlenstoff enthaltenden Feinstaub in den Abgasen von Dieselmotoren mittels elektrischer Einrichtungen entfernt wird, mit einer Nadelelektrode (4), die auf einer stromaufwärtigen Seite eines Abgaspfades (1) in dem Hauptkörper der Verarbeitungsvorrichtung angeordnet ist, einem Entlade- und Ladebereich (2) mit einem Koronaentladebereich (2-1), der Elektronen (10) auf der Grundlage von Koronaentladung durch die Nadelelektrode (4) abgibt, und einem Ladebereich (2-2), der den Feinstaub mit den abgegebenen Elektronen (10) lädt, und einem Sammelbereich, der den geladenen Feinstaub sammelt und auf einer stromabwärtigen Seite des Abgaspfades (1) angeordnet ist, **dadurch gekenn-**

**zeichnet, dass** die Nadelelektrode (4) einen Außenumfang aufweist, der mit einem Überzug bedeckt ist, der eine mehrlagige Struktur aufweist, wobei der Überzug, der die mehrlagige Struktur aufweist, der den Außenumfang der Nadelelektrode bedeckt, aus einer ersten Isolatorüberzugslage (4a), die aus einem Isolator hergestellt ist, einer zweiten Leiterüberzugslage (4b), die aus einem Leiter hergestellt ist, die eine Außenseite der ersten Isolatorüberzugslage (4a) bedeckt, und einer dritten Isolatorüberzugslage (4c) gebildet ist, die eine Außenseite der zweiten Leiterüberzugslage (4b) mit einem Isolator bedeckt.

3. Elektrische Verarbeitungsvorrichtung für Abgase von Dieselmotoren nach Anspruch 2, wobei die erste Isolatorüberzugslage (4a) und die dritte Isolatorüberzugslage (4c) der Nadelelektrode (4) beispielsweise aus Quarzglas, Aluminiumoxid oder Keramik ausgebildet sind und die zweite Isolatorüberzugslage (4b) derselben aus einem Leiter wie beispielsweise einem Metallrohr mit einer kleinen Wanddicke oder einer Drahtplatte ausgebildet ist.

4. Elektrische Verarbeitungsvorrichtung für Abgase von Dieselmotoren nach einem der Ansprüche 2 oder 3, wobei die Nadelelektrode (4) des Koronaentladebereiches in ein aus einem Isolator ausgebildetes Gasrohr (5) eingeführt und darin angeordnet ist und ein distales Ende der Nadelelektrode (4) einer strom-abwärtigen Seite eines Abgasstromes (1) gegenüberliegt und angeordnet ist, um in einem Potenzialkern eines Dichtungsgasstromes oder auf einer stromabwärtigen Seite des Potenzialkernes positioniert zu werden und **dadurch** Koronaelektronen (10) in Richtung der stromabwärtigen Seite zu entladen.

5. Elektrische Verarbeitungsvorrichtung für Abgase von Dieselmotoren nach einem der Ansprüche 2 bis 4, wobei eine Stabilisatorplatte (5-1) in einem Teil oder der Gesamtheit des Dichtungsgasrohres (5) angeordnet ist und ein plattenförmiges Element oder ein bienenwabenförmiges Element für die Stabilisatorplatte verwendet wird.

6. Elektrische Verarbeitungsvorrichtung für Abgase von Dieselmotoren nach einem der Ansprüche 2 bis 5, wobei ein Dummy-Rohrbereich (5-2) auf einer Rohrwand vorgesehen ist, die auf einer entgegengesetzten Seite einer distalen Endseite des Dichtungsgasrohres (5) einer Nadelelektrode (4) parallel zu einer Richtung des Abgasstromes positioniert ist, und wobei das den Dummy-Rohrbereich (5-2) aufweisende Dichtungsgasrohr (5) Bedingungen von L1/D > 1,5 und L2/D > 0,5 erfüllt, wobei D ein Innendurchmesser des Dichtungsgasrohres, L2 eine Länge des Dummy-Rohrbereiches in dem Dichtungsgasrohrbereich ist und L1 eine Länge von dem Dummy-Rohrbereich zu dem distalen Endbereich ist.

7. Elektrische Verarbeitungsvorrichtung für Abgase von Dieselmotoren nach einem der Ansprüche 2 bis 6, wobei ein Zyklonabscheider (62) zusätzlich auf einer hinteren Stufe der elektrischen Verarbeitungsvorrichtung für Abgase vorgesehen ist.

8. Elektrische Verarbeitungsvorrichtung für Abgase von Dieselmotoren nach Anspruch 7, wobei der Sammelbereich der elektrischen Verarbeitungsvorrichtung für Abgase durch die Anordnung einer oder mehrerer Sammelplatten (3) gebildet ist, wovon jede entweder aus einer Basisplatte (71-1a), die aus einer Platte ohne Öffnung auf einer Sammelfläche besteht, oder aus einer Kombination der Basisplatte gebildet ist, die aus einer Platte und einer gitterförmigen Finne (71-1b) besteht, die auf der Sammelflächenseite der Basisplatte (71-1a) vorgesehen ist, um einen Spalt zwischen den Sammelplatten (3) und der Innenwand des Hauptkörpers der Vorrichtung auszubilden, und wobei die Basisplatte eine zweilagige Struktur aufweist, indem ein Isolatorwerkstoff auf der Sammelfläche und ein geerdeter Leiterwerkstoff auf einer hinteren Fläche angeordnet ist.

9. Elektrische Verarbeitungsvorrichtung für Abgase von Dieselmotoren nach einem der Ansprüche 7 oder 8, wobei eine Feinstaubagglomerations-Vergröberungseinrichtung auf einer vorderen Stufe des Zyklonabscheiders angeordnet ist, und entweder ein Feinstaubagglomerationsrohr (80) mit einer Bienenwabenstruktur oder einer Feinstaubagglomerationsplatte (90), die durch Anordnung einer Vielzahl von Streck- bzw. Stanzmetallen oder Drahtplatten in zuvor festgelegten Abständen gebildet ist, als Feinstaubagglomerations-Vergröberungseinrichtung verwendet wird.

**Revendications**

1. Procédé de traitement électrique d'un gaz d'échappement de moteur diesel qui retire des particules en suspension contenant principalement du carbone présentes dans un gaz d'échappement de moteur diesel par un moyen électrique, **caractérisé par** les étapes suivantes consistant à fournir une électrode pointue (4) dont la périphérie extérieure est recouverte d'un revêtement présentant une structure multicouche et qui est agencée sur un côté amont d'un passage de gaz d'échappement dans un appareil électrique de traitement de gaz d'échappement, fournir une région de décharge et de charge comprenant une région de décharge à effet corona (2-1) qui émet des électrons sur la base d'une décharge à effet corona par l'électrode pointue (4) et une région de charge (2-2) qui charge les particules en suspension avec les électrons émis, charger les particules en suspension dans un gaz d'échappement dans la région de charge avec les électrons déchargés par effet corona dans la région de décharge à effet corona (2-1), et agencer une région de collecte sur un côté aval du passage de gaz d'échappement qui collecte les particules en suspension chargées, où le revêtement présentant la structure multicouche qui recouvre la périphérie extérieure de l'électrode pointue est formé d'une première couche de revêtement isolant (4a) constituée d'un isolant, d'une deuxième couche de revêtement conducteur (4b) constituée d'un conducteur qui recouvre un côté extérieur de la première couche de revêtement isolant, et d'une troisième couche de revêtement isolant (4c) qui recouvre une couche extérieure de la deuxième couche de revêtement conducteur (4b) avec un isolant.

2. Appareil de traitement électrique d'un gaz d'échappement de moteur diesel qui retire des particules en suspension contenant principalement du carbone présentes dans un gaz d'échappement de moteur diesel par un moyen électrique, comprenant une électrode pointue (4) agencée sur un côté amont d'un passage de gaz d'échappement (1) dans le corps principal de l'appareil de traitement, une région de décharge et de charge (2) comprenant une région de décharge à effet corona (2-1) qui émet des électrons (10) sur la base d'une décharge à effet corona par l'électrode pointue (4) et une région de charge (2-2) qui charge les particules en suspension avec les électrons émis (10) étant fournies, et une région de collecte qui collecte les particules en suspension chargées étant agencée sur un côté aval du passage de gaz d'échappement (1), **caractérisé en ce que** l'électrode pointue (4) présente une périphérie extérieure recouverte d'un revêtement présentant une structure multicouche, où le revêtement présentant la structure multicouche qui recouvre la périphérie extérieure de l'électrode pointue est formé d'une première couche de revêtement isolant (4a) constituée d'un isolant, d'une deuxième couche de revêtement conducteur (4b) constituée d'un conducteur qui recouvre un côté extérieur de la première couche de revêtement isolant (4a), et d'une troisième couche de revêtement isolant (4c) qui recouvre un côté extérieur de la deuxième couche de revêtement conducteur (4b) avec un isolant.

3. Appareil de traitement électrique d'un gaz d'échappement de moteur selon la revendication 2, où la première couche de revêtement isolant (4a) et la troisième couche de revêtement isolant (4c) de l'électrode pointue (4) sont formées d'un matériau tel que le verre de silice, l'oxyde d'aluminium, ou des céramiques, et la deuxième couche de revêtement conducteur (4b), constituée du même matériau, est formée d'un conducteur, comme un tube métallique présentant une faible épaisseur de paroi ou une résille métallique.

4. Appareil de traitement électrique d'un gaz d'échappement de moteur diesel selon l'une quelconque des revendications 2 ou 3, où l'électrode pointue (4) de la région de décharge à effet corona est insérée et agencée dans un tube à gaz d'étanchéité (5) formé d'un isolant et une extrémité distale de l'électrode pointue (4) fait face à un côté aval d'un flux de gaz d'échappement (1) et est agencée pour être placée dans un noyau virtuel d'un flux de gaz d'étanchéité ou sur un côté aval du noyau virtuel, déchargeant ainsi des électrons (10) issus de l'effet corona vers le côté aval.

5. Appareil de traitement électrique d'un gaz d'échappement de moteur diesel selon l'une quelconque des revendications 2 à 4, où une plaque stabilisatrice (5-1) est agencée dans tout ou partie du tube à gaz d'étanchéité (5), et un élément en forme de plaque ou un élément en forme de nid d'abeille est utilisé pour la plaque stabilisatrice.

6. Appareil de traitement électrique d' un gaz d'échappement de moteur diesel selon l'une quelconque des revendications 2 à 5, où une région de tube fictif (5-2) est fournie sur une paroi de tube placée sur un côté opposé à un côté d'extrémité distale d'électrode pointue (4) du tube à gaz d'étanchéité (5) parallèlement à une direction du flux de gaz d'échappement, et le tube à gaz d'étanchéité (5) présentant la région de tube fictif (5-2) satisfait aux conditions selon lesquelles L1/D > 1,5 et L2/D > 0,5, D étant un diamètre interne du tube à gaz d'étanchéité, L2 étant une longueur de la région de tube fictif dans la région de tube à gaz d'étanchéité, et L1 étant une longueur allant de la région de tube fictif à la région d'extrémité distale,

7. Appareil de traitement électrique pour un gaz d'échappement de moteur diesel selon l'une quelconque des revendications 2 à 6, où un filtre électrostatique à cyclone (62) est fourni de manière supplémentaire sur un étage arrière de l'appareil de traitement électrique d'un gaz d'échappement.

8. Appareil de traitement électrique d'un gaz d'échappement de moteur diesel selon la revendication 7, où la région de collecte de l'appareil de traitement électrique d'un gaz d'échappement est constituée par agencement d'une ou plusieurs plaques de collecte (3) dont chacune est formée d'une plaque de base (71-1a), constituée d'une plaque ne présentant pas d'ouverture sur une surface de collecte, ou d'une combinaison de la plaque de base, constituée d'une plaque et d'une ailette de type treillis (71-1b) fournie sur le côté surface de collecte de la plaque de base (71-1a) de manière à former un espace entre les plaques de collecte (3) et la paroi intérieure du corps principal d'appareil, et la plaque de base présente une structure à deux couches par agencement d'un matériau isolant sur la surface de collecte et d'un matériau conducteur, mis à la masse, sur une surface arrière.

9. Appareil de traitement électrique d'un gaz d'échappement de moteur diesel selon l'une quelconque des revendications 7 ou 8, où un moyen d'augmentation de la grosseur des grains lors de l'agglomération des particules est agencé sur un étage avant du filtre électrostatique à cyclone, et un tube d'agglomération des particules (80), présentant une structure en nid d'abeille, ou une plaque d'agglomération des particules (90), constituée par agencement d'une pluralité d'éléments métalliques perforés ou de résilles métalliques à des intervalles prédéterminés, est utilisé comme moyen d'augmentation de la grosseur des grains lors de l'agglomération des particules.

FIG.1

## FIG.2A

FIG.2B

FIG.2C

FIG.2D

FIG.2E

FIG.3

FIG.4

## FIG.5

## FIG.6A

## FIG.6B

FIG.7A

FIG.7B

FIG.8

FIG.9

FIG.10A

71-1

71-1b

71-1a

FIG.10B

71-1a-1
71-1a-2

FIG.11

FIG.12

FIG.13

FIG.14

## FIG.15

PRIOR ART

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H91997112246 A
- JP H61994173637 A
- JP 2003269133 A
- DE 20303087